Europäisches Patentamt

European Patent Office

Office européen des brevets

(11) Publication number: **0 171 830**
**B1**

(12) **EUROPEAN PATENT SPECIFICATION**

(45) Date of publication of patent specification: **20.09.89**

(21) Application number: **85201059.4**

(22) Date of filing: **02.07.85**

(51) Int. Cl.⁴: **B 23 B 49/00**

(54) **Method for inserting wood preservatives into wood.**

(30) Priority: **12.07.84 NL 8402211**

(43) Date of publication of application:
**19.02.86 Bulletin 86/08**

(45) Publication of the grant of the patent:
**20.09.89 Bulletin 89/38**

(84) Designated Contracting States:
**AT BE CH DE FR GB IT LI LU NL SE**

(56) References cited:
**DE-C- 188 356**
**US-A-1 389 390**
**US-A-2 477 891**
**US-A-3 000 239**

(73) Proprietor: **Woudsma, Jacob**
**Vogezenlaan 23**
**NL-5801 PX Venray (NL)**

(72) Inventor: **Woudsma, Jacob**
**Vogezenlaan 23**
**NL-5801 PX Venray (NL)**

(74) Representative: **Kooy, Leendert Willem et al**
**OCTROOIBUREAU VRIESENDORP & GAADE**
**P.O. Box 266**
**NL-2501 AW The Hague (NL)**

Courier Press, Leamington Spa, England.

## Description

Method for inserting wood preservatives into wood.

The invention relates to a method for inserting wood preservatives into wood.

It is known to insert wood preservatives into wood by drilling holes into the wood and subsequently introducing capsules filled with wood preservatives or plugs impregnated with wood preservatives into said holes. It is important that the holes are drilled into the wood to a certain depth adapted to the length of the capsules. For that purpose a drill can be used with a sleeve around it, which sleeve prevents the drill to penetrate further into the wood as soon as the sleeve comes into contact with the surface of the wood.

According to the invention a spiral drill is used for this purpose with a sleeve made of synthetic material around it, which sleeve is connected to the drill in such a way that it comes to a standstill while the drill keeps rotating, as soon as the sleeve comes into contact with the surface into which the hole is being drilled. In this way the wood will not be damaged as soon as the sleeve comes into contact with said surface.

Spiral drills with a sleeve around it which is connected with the drill in such a way that it comes to a standstill while the drill keeps rotating, as soon as the sleeve comes into contact with the surface into which the hole is being drilled, are known for other purposes (US—A—2 477 891 and US—A—1 389 390). However, a spiral drill according to the invention has a sleeve made of synthetic material. The combination of a spiral drill and a sleeve made of synthetic material is new and can be successfully used for the method as mentioned above. An embodiment of a spiral drill according to the invention which is preferred, has a sleeve with two different inner diameters, the larger diameter in the drilling direction, and is locked between a ring which is connected at its side which is turned away from the drilling direction with the drill shaft and has a diameter sized such that the sleeve is supported thereon, and a Seeger-ring being present in the part of the sleeve having the larger diameter, which Seeger-ring is positioned in a groove of the drill.

By this construction it is attained that the sleeve cannot be adjusted incorrectly in view of the drilling depth desired. Moreover it is impossible that the means with which the sleeve is fastened on the drill vibrates loose during drilling. Preferably a thin plate made of steel is attached to the side of the sleeve which is turned away from the drilling direction in order to prevent that if the sleeve comes into contact with the surface to be drilled in and comes to a standstill, the Seeger-ring rotating with the drill penetrates into the ring of synthetic material, so that the ring would have to be replaced soon.

It is also possible to provide a ring at the side turned away from the drilling direction around the drill shaft by soldering a steel ring onto the drill shaft. Then a steel ring having a diameter which is substantially equal to the outer diameter of the sleeve is applied to prevent this soldered ring to eat its way into the sleeve under the great pressure which will be exerted if the drill depth has been reached and the sleeve comes to a standstill, which would not benefit the duration of life of the sleeve.

If required, the sleeve can be lengthened by elongation pieces. For instance this could be done by providing each elongation piece with raised borders, which clampingly fit into the hollow space of the preceding elongation piece of the first mounted sleeve.

The invention is further elucidated by means of the enclosed drawings.

Figure 1 relates to an embodiment, in which the sleeve determining the drill depth is locked between two Seeger-rings.

Figure 2 is a rear view of figure 1 according to arrow A.

Figure 3 relates to a variant of the embodiment according to figure 1.

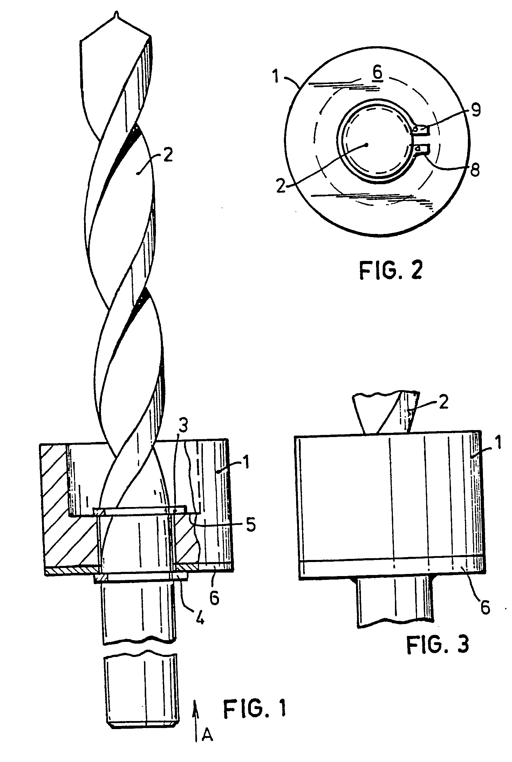

During mounting of the embodiment according to figure 1 the Seeger-ring 3 is mounted first. Thereupon the sleeve 1 is slid along the drill 2 until the buffer surfaces 5 are positioned against the ring 3. Thereupon the Seeger-ring 4 is mounted in the groove about the shaft under the sleeve 1. This has been further illustrated in figure 2. Before mounting the ring 4 the projecting lips 8 are separated by means of a pair of pliers with projecting pins suitable for this purpose, which fit into the openings 9 of the lips 8, and the ring is slid to a groove in the shaft portion of the drill. Once there the ring falls into the groove under the influence of its resilience. Then the lips 8 can be soldered onto each other or possibly to an extra ring which was mounted about the drill shaft in advance to prevent the Seeger-ring to spring loose from a groove which is not deep enough.

If the sleeve 1 is made of synthetic material a washer 6 is mounted therebehind, e.g. of stainless steel, which could be fixedly connected to the sleeve 1, this washer prevents the ring 4 to penetrate into the sleeve when the sleeve is pressed forcefully against this ring by the surface in which it is drilled and comes to a standstill.

In both embodiments the end of the drill is sharpened in order to prevent the drill from running away at the beginning of the drill passage.

By giving the hollow space in the sleeve a considerably larger diameter than the diameter of the drill this space can pick up material which has been drilled away.

## Claim

Method for inserting wood preservatives into wood, by drilling holes into wood, and subsequently introducing capsules filled with wood preservatives or plugs impregnated with wood preservatives into said holes, characterized by drilling each of the holes with a predetermined depth into the wood by means of a spiral drill with a sleeve made of synthetic material around it, which is connected with the drill such that it comes to a standstill while the drill keeps rotating, as soon as the sleeve comes into contact with the surface into which the hole is being drilled.

**Patentanspruch**

Verfahren zum Einführen von Holzschutzmitteln in Holz durch Bohren von Löchern in Holz und anschließendes Einführen von mit Holzschutzmitteln gefüllten Ampulle oder von mit Holzschutzmitteln getränkten Stopfen in die Löcher, gekennzeichnet durch das Bohren eines jeden Loches mit einer vorbestimmten Tiefe in das Holz mittels eines Spiralbohrers der von einer Buchse aus synthetischem Material umgeben ist, die mit dem Bohrer derart verbunden ist, daß sie zum Stillstand kommt, sobald sie mit der Oberfläche in Berührung gelangt, in die das Loch gebohrt wird, während der Bohrer weiterhin rotiert.

**Revendication**

Procédé destiné à l'introduction dans un bois d'un produit protecteur consistant à percer des trous dans le bois et à introduire dans ces trous des capsules remplies de produit protecteur du bois ou des chevilles imprégnées d'un tel produit protecteur, caractérisé en ce qu'il consiste à percer dans le bois chacun des trous à une profondeur prédéterminée au moyen d'un foret hélicoïdal entouré d'un manchon réalisé en une matière synthétique assujetti audit forêt de manière telle que pendant la rotation du foret il constitue une butée dès qu'il vient en contact avec la surface dans laquelle le trou doit être percé.

FIG. 2

FIG. 3

FIG. 1

1